# EUROPÄISCHE PATENTSCHRIFT

(11) **EP 1 283 478 B1**
(45) Veröffentlichungstag und Bekanntmachung des Hinweises auf die Patenterteilung: **20.10.2004**
(21) Anmeldenummer: 01119363.8
(22) Anmeldetag: 10.08.2001
(51) Int. Cl.: G06F 17/30, H04M 3/51, H04L 29/06

(54) **Verfahren, Kommunikationsanordnung, Datennetz-Server und Nebenstellenanlage zum Erweitern einer Datennetz-Verbindung**
Method, communication system, data network server and PBX for extending of a data network connection
Procédé, système de communication, serveur dans un réseau de données et autocommutateur privés permattant d'étendre une connection dans un réseau de données

(43) Veröffentlichungstag der Anmeldung: 12.02.2003
(73) Patentinhaber: SIEMENS AKTIENGESELLSCHAFT, 80333 München (DE)
(72) Erfinder: Mitreuter, Ulrich, Dr., 82549 Koenigsdorf (DE); Zygan-Maus, Renate, Dr., 81477 München (DE)

(56) Entgegenhaltungen:
- WO-A-00/49794
- WO-A-01/49015
- WO-A-97/42728
- WO-A-99/26153
- US-A- 5 884 032
- US-B1- 6 188 762

## Beschreibung

Eine Vielzahl von Internet-Anbietern halten umfangreiche und komplexe Angebote im Internet vor, z.B. Dienstleistungen im Bereich des Bank- und Finanzwesens wie Internet-Wertpapierinformationsdienste, die insbesondere für unerfahrene Nutzer ohne Hilfe meist nur eingeschränkt bedienbar sind. Mithilfe einer durch den Nutzer einfach zu bedienenden interaktiven Form der Hilfestellung beispielsweise durch einen Mitarbeiter eines Call Centers kann der Internet-Anbieter dabei die Nutzbarkeit und damit die Akzeptanz seines Angebots steigern.

Ein grundlegendes System und Verfahren zur gleichzeitigen Kommunikation mittels mehrerer Medien, beispielsweise mittels Internet-Whiteboard, Web Page Navigation und/oder Real Time Conference ist aus WO 99/26153A bekannt. Ein solches System und Verfahren würde bereits einfache Hilfestellungen für Nutzer von Internet-Angeboten erlauben, die allerdings nur geringen Nutzerkomfort aufweisen.

Eine weitere Hilfestellung zu Internet-Angeboten wird mittels des sogenannten Click-to-Dial Dienstes realisiert. Durch den Click-to-Dial Dienst, beispielsweise offenbart in WO 01/49015, wird auf Anforderung, beispielsweise durch Aktivieren einer dafür vorgesehenen Schaltfläche auf einer dem Nutzer angezeigten Internet-Seite des Anbieters durch den Nutzer, zwischen der Telefoneinrichtung des Nutzers und beispielsweise der Telefoneinrichtung eines Mitarbeiters des Call Centers durch eine bestehende Internetverbindung des Nutzers veranlaßt eine Telefonverbindung aufgebaut. Dies ermöglicht dem Nutzer, ohne Kenntnis der Rufnummer des Call Centers und ohne manuelle Auswahl des für die Fragestellung zuständigen Call Centers des Anbieters - z.B. sind für inhaltliche und technische Fragen verschiedene Call Center vorgesehen - auf einfache Weise eine Telefonverbindung zum zuständigen Call Center des Anbieters aufzubauen.

US-A-5,884,032 offenbart eine Verbesserung des Click-to-Dial dienstes, die darin besteht, die Adresse jener Seite an einen Mitarbeiter des Call Centers zu übertragen, zu der die Hilfestellung gewünscht wird.

Der Dienst Click-to-Dial ist jedoch keine für den Nutzer ausreichende Hilfestellung, da der Nutzer die vom Mitarbeiter des Call Centers genannten Internet-Seiten über deren Adressen von Hand in seinen Internet-Browser eintragen muß, wobei im Falle dynamisch erzeugter Internet-Inhalte nicht sichergestellt ist, daß dem Mitarbeiter des Call Centers und dem Nutzer die gleichen Internet-Inhalte unter der gleichen Adresse angezeigt werden. Außerdem müssen der Mitarbeiter des Call Centers und der Nutzer sich beim im Rahmen der Hilfestellung stattfindenden gemeinsamen Betrachten der Internet-Seiten ständig über ihre jeweiligen Schritte, etwa die betätigten Schaltflächen oder Verweise - Links -, austauschen, damit dem Mitarbeiter des Call Centers und dem Nutzer die gleichen Internet-Inhalte angezeigt werden.

US-B-6,188,762 offenbart ein Call Center, in welchem ausgehend von einer Serviceanforderung per Telefon basierend auf bestimmten Parametern, beispielsweise einer Rufnummer eines Anrufers und/oder einer gerufenen Rufnummer, aus einer Datenbank bestimmte Daten abgerufen und am Arbeitsplatz eines Mitarbeiters des Call Centers angezeigt werden.

Die der vorliegenden Erfindung zugrundeliegende Aufgabe besteht darin, den Click-to-Dial Dienst zu verbessern.

Diese Aufgabe wird ausgehend von einem Verfahren zum Erweitern einer bestehenden Datennetz-Verbindung gemäß des Patentanspruchs 1, durch eine Kommunikationsanordnung zum Einleiten sowohl einer Datennetz-Konferenzverbindung als auch einer Sprachverbindung zwischen wenigstens einem Datennetz-Endgerät eines Nutzers und einem Call Center gemäß des Patentanspruchs 8 und durch eine Nebenstellenanlage gemäß des Patentanspruchs 12 gelöst.

Ein wesentlicher Vorteil der Erfindung besteht darin, daß ein erweiterter Dienst angeboten werden kann, bei dem es dem Nutzer eines Datennetz-Angebotes durch eine einfache Aktion, z.B. Klicken auf eine hierfür vom Anbieter des Datennetz-Angebotes vorgesehene Schaltfläche auf einer dem Nutzer auf dessen Bildschirm angezeigten Datennetz-Seite, ermöglicht wird, automatisch die bestehende Datennetz-Verbindung zu einer Datennetz-Konferenz mit einem Mitarbeiter eines Call Centers des Anbieters zu erweitern und parallel eine Sprachverbindung aufzubauen, beispielsweise um Hilfe zu einer bestimmten Datennetz-Seite innerhalb des Datennetz-Angebotes des Anbieters zu erhalten. Dabei kann sowohl dem Mitarbeiter des Call Centers als auch dem Nutzer als erste Datennetz-Seite die Datennetz-Seite angezeigt werden, die den Ausgangspunkt für die Fragestellung des Nutzers bildet.

Diese Datennetz-Konferenz kann entweder nur durch den Nutzer oder nur durch den Mitarbeiter des Call Centers oder durch beide steuerbar sein. So kann z.B. festgelegt werden, daß nur der Mitarbeiter des Call Centers die Datennetz-Konferenz steuern und neue Datennetz-Seiten vorgeben kann.

Vorteilhaft wird der Dienst Synchronized Surfing für die Datennetz-Konferenz verwendet. Durch den Internet-Dienst Synchronized Surfing - synchronisierte Darstellung von Netz-Inhalten - wird es zwei oder mehr Internet-Nutzern ermöglicht, gemeinsam Internet-Inhalte jeweils an ihren Bildschirmen zu betrachten, d.h. jedes Anklicken eines Links durch einen der Internet-Nutzer führt automatisch dazu, daß die durch diesen Link ausgewählte Internet-Seite allen Teilnehmern der Synchronized Surfing Session gleichzeitig angezeigt wird. Die Synchronized Surfing Session wird durch einen eindeutigen Bezeichner - Session ID - identifiziert. Ist ein Internet-Nutzer berechtigt, an einer Synchronized Surfing Session teilzunehmen, wird durch ihn eine HTTP-Verbindung - Hyper Text Transfer Protocol - zwischen seinem Personalcomputer und dem die Synchronized Surfing Session verwaltenden Dienste-Server im Internet aufgebaut und die Session ID der Synchronized Surfing Session als Parameter übergeben.

Gemäß einer vorteilhaften Ausgestaltung der Erfindung werden die zum Einleiten und Koordinieren der Sprachverbindung und der Synchronized Surfing Session benötigten Daten mit Hilfe von Signalisierungsnachrichten im Telefonnetz übertragen. Dabei ist von Vorteil, daß bekannte und standardisierte Signalisierungsnachrichten eingesetzt werden, die lediglich eine Anpassung an der Nebenstellenanlage im Call Center des Anbieters, jedoch keine Änderungen an den Vermittlungsstellen des Telefonnetzes erfordern.

Falls der Nutzer nur über einen analogen Telefonanschluß ohne separaten Zugang zum Datennetz verfügt, wird der Telefonanschluß zur Einwahl in das Datennetz bzw. Internet verwendet. Vorteilhaft wird dann die Sprachverbindung über die Datennetz-Verbindung realisiert, z.B. unter Verwendung des Voice over IP Mechanismus.

Die Erfindung betrifft auch eine Nebenstellenanlage zum Anschluss an ein Öffentliches Telefonnetz, die Mittel zur Auswertung einer Nachwahlrufnummer eingehender Anrufe und Mittel zur Bestimmung einer Server ID eines Konferenzservers und einer Session ID einer Synchronized Surfing Session aus der Nachwahlrufnummer aufweist.

Weitere vorteilhafte Ausgestaltungen der Erfindung sind den Unteransprüchen zu entnehmen.

Im folgenden wird das erfindungsgemäße Verfahren anhand einer Zeichnung näher erläutert.

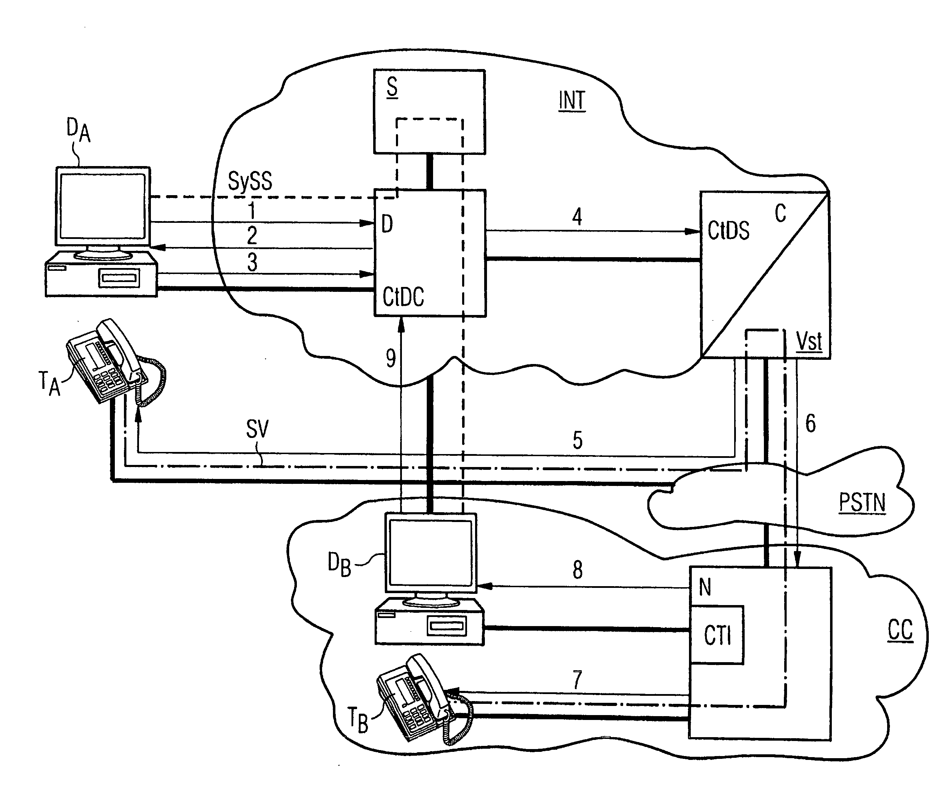

Die Figur zeigt ein Telefon T_{A} und einen Personalcomputer D_{A} eines Nutzers. Der Personalcomputer D_{A} ist mit dem Internet INT verbunden. Durch diesen Personalcomputer D_{A} werden zum Abruf bereitgestellte Inhalte von einem Dienste-Server D eines Anbieters im Internet INT abgerufen und auf einem Bildschirm des Nutzers angezeigt. Einige oder alle Internet-Seiten dieses Internet-Angebots enthalten spezielle Hilfe-Schaltflächen, nach deren Aktivierung durch den Nutzer eine erfindungsgemäße interaktive Hilfestellung gestartet wird.

Der Dienste-Server D erfüllt darüberhinaus die Aufgabe eines Click-to-Dial Anwenders CtDC - Click-to-Dial Client - und ist mittels Internet Protocol mit einem Synchronized Surfing Server S und mittels der Protokolle SIP/PINT - Session Initiation Protocol/Public Switched Telephone Network and Internet Internetworking - mit einem Call Server C verbunden. In einer Ausgestaltung werden die Funktionen des Dienste-Servers D und die Funktionen des Synchronized Surfing Servers S in einem einzigen Server zusammengefaßt (nicht dargestellt).

Der Synchronized Surfing Server S ist ein Server des Internet INT, der alle zum Aufbau und zur Verwaltung einer Synchronized Surfing Session SySS erforderlichen Mittel enthält.

Der Call Server C ist sowohl Teil des Internet INT als auch Vermittlungsstelle Vst im öffentlichen Telefonnetz PSTN-public switched telephone network. In einer möglichen ausgestaltung handelt es um eine vermittlungsstelle Vst mit ange-schlossenem Internet-Server (nicht dargestellt). Dieser angeschlossene Internet-Server enthält die Funktion Click-to-Dial Server CtDS und in einer weiteren Ausgestaltung auch die Funktion Voice over IP Gateway (nicht dargestellt).

An das öffentliche Telefonnetz PSTN ebenfalls angeschlossen ist die Nebenstellenanlage N im Call Center CC des Anbieters. Diese Nebenstellenanlage N enthält einen CTI Server CTI-Computer Telephony Interface Server -, der Mittel zur Bestimmung einer Server ID des Synchronized Surfing Servers S und einer Session ID der Synchronized Surfing Session SySS aus einer Nachwahlrufnummer eingehender Anrufe aufweist.

Der Arbeitsplatz eines Mitarbeiters des Call Centers CC, bestehend aus einem weiteren Telefon T_{B} und einem weiteren Personalcomputer D_{B}, ist mit der Nebenstellenanlage N verbunden. Die Verbindung zwischen dem weiteren Personalcomputer D_{B} und der Nebenstellenanlage N ist dabei so gestaltet, daß die Nebenstellenanlage N die Server ID des Synchronized Surfing Servers S und die Session ID der Synchronized Surfing Session SySS übermitteln und ein Kommando zum Verbinden mit der Synchronized Surfing Session SySS mit dieser Server ID und Session ID an den weiteren Personalcomputer D_{B} senden kann. In einer vorteilhaften Ausgestaltung ist das weitere Telefon T_{B} als Datennetztelefon in den weiteren Personalcomputer D_{B} integriert (nicht dargestellt). Dann erfolgt die Übermittlung der Sprachinformation zwischen dem Arbeitsplatz des Mitarbeiters und der Nebenstellenanlage N mittels Voice over IP über die genannte Verbindung zwischen Nebenstellenanlage N und dem weiteren Personalcomputer D_{B}.

Im folgenden sind die mit 1..9 bezeichneten Vorgänge erläutert, die zwischen den genannten Einrichtungen ablaufen, um eine Datennetz-Verbindung zu einer Sprachverbindung SV und einer Synchronized Surfing Session SySS zwischen dem Nutzer und einem Mitarbeiter des Anbieters zu erweitern. Diese Vorgänge werden ausgelöst durch den Nutzer, der Hilfe zu einer bestimmten Internet-Seite im Internet-Angebot des Anbieters benötigt. Aktivieren einer durch den Anbieter bereitgestellte Hilfe-Schaltfläche durch den Nutzer löst folgende Schritte aus:
1. Auf dem Bildschirm des Nutzers wird eine Abfrage eingeblendet, unter welcher Rufnummer ein Rückruf erfolgen soll und ob die Teilnahme an einer Synchronized Surfing Session SySS mit einem Mitarbeiter des Call Centers CC gewünscht wird. In einer vorteilhaften Ausgestaltung können die entsprechenden Angaben (Rufnummer des Telefons T_{A} des Nutzers, Teilnahmewunsch an angebotenen Synchronized Surfing Sessions SySS) auf dem Personalcomputer D_{A} des Nutzers z.B. als Standardwerte hinterlegt sein. . Falls der Nutzer die Teilnahme an einer Synchronized Surfing Session bestätigt - dies sei fortan vorausgesetzt -, wird durch den Dienste-Server D, der die Logik für den Dienst Click-to-Dial enthält und eine Verbindung zum Synchronized Surfing Server S aufweist, der Start einer Synchronized Surfing Session SySS veranlaßt.
   Auf dem Synchronized Surfing Server S wird auf Anforderung durch den Dienste-Server D eine Synchronized Surfing Session SySS erzeugt, die durch eine eindeutige Session ID und die Server ID des Synchronized Surfing Servers S referenziert wird.
2. Ein Synchronized Surfing Applet wird in den Personalcomputer D_{A} des Nutzers geladen und die Server ID des Synchronized Surfing Servers S, auf dem die Synchronized Surfing Session SySS abläuft, und die Session ID der Synchronized Surfing Session SySS werden an dieses Synchronized Surfing Applet übertragen.
3. Durch das Synchronized Surfing Applet wird anhand der Session ID der Synchronized Surfing Session SySS und der Server ID des Synchronized Surfing Servers eine Verbindung zu der Synchronized Surfing Session SySS hergestellt. Der Nutzer wird so Teilnehmer der Synchronized Surfing Session SySS.
4. Anschließend wird der Aufbau der Sprachverbindung SV zur Nebenstellenanlage N des Call Centers CC durch den Dienste-Server D veranlaßt. Als Rufnummer wird die Telefonnummer des Call Centers CC zusammen mit einer Nachwahlrufnummer verwendet und an den Call Server C gesendet. Diese Nachwahlrufnummer zur Rufnummer der Nebenstellenanlage N des Call Centers CC wird aus der Server ID des Synchronized Surfing Servers S und der Session ID der Synchronized Surfing Session SySS - beide IDs sind Digit-Strings fester Länge - zusammengesetzt.
   Ebenfalls durch den Dienste-Server D wird der Aufbau der Sprachverbindung SV zum Telefon T_{A} des Nutzers veranlaßt. Als Rufnummer wird die vom Nutzer angegebene Rufnummer verwendet und an den Call Server C gesendet.
5. Die Sprachverbindung SV zum Telefon T_{A} wird durch den Call Server C aufgebaut.
6. Durch den Call Server C wird die Sprachverbindung SV zur Nebenstellenanlage N des Call Centers CC aufgebaut.
7. Durch den CTI Server CTI - Computer Telephony Interface Server, integriert in die Nebenstellenanlage N - des Call Centers CC wird die Nachwahlrufnummer entfernt und der Ruf zu dem weiteren Telefon T_{B} eines freien Mitarbeiters des Call Centers CC weitergeleitet.
8. Gleichzeitig werden die Server ID des Synchronized Surfing Servers S und die Session ID der Synchronized Surfing Session SySS aus der Nachwahlrufnummer durch den CTI Server CTI ermittelt und an die Call-Center-Software auf dem weiteren Personalcomputer D_{B} des Mitarbeiters des Call Centers CC übermittelt.
9. Auf dem weiteren Personalcomputer D_{B} des Mitarbeiters des Call Centers CC wird durch die Call-Center-Software automatisch ein HTTP-Browser gestartet, der unter Verwendung der Session ID der Synchronized Surfing Session SySS und der Server ID des Synchronized Surfing Servers S mit der Synchronized Surfing Session SySS verbunden wird.

Nunmehr ist es dem Mitarbeiter möglich, dem Nutzer effizient sowohl fernmündlich sofort auf Fragen zu antworten als auch dem Nutzer das Internet-Angebot des Anbieters mittels Synchronized Surfing vorzuführen.

Die Erfindung ist nicht auf das Ausführungsbeispiel beschränkt. So kann beispielsweise die Anbindung der Sprachendgeräte T_{A}, T_{B} unabhängig voneinander mittels Voice over IP erfolgen.

Im Falle der Anbindung des Telefons T_{A} des Benutzers mittels Voice over IP wird die Funktion des Telefons T_{A} beispielsweise in den Personalcomputer D_{A} des Benutzers integriert und die Voice over IP Gateway Funktion des Call Servers C benutzt, um die Verbindung mit dem Gerät D_{A} zu ermöglichen.

Die Verbindung des weiteren Telefons T_{B} des Mitarbeiters des Call Centers CC wird mittels Voice over IP ausgeführt, indem die Funktion des weiteren Telefons T_{B} beispielsweise in den weiteren Personalcomputer D_{B} des Mitarbeiters des Call Centers CC integriert und die Sprachinformation über die vorhandene Verbindung zwischen dem weiteren Personalcomputer D_{B} und der Nebenstellenanlage N übertragen wird, wobei die Nebenstellenanlage N als Voice over IP Gateway zwischen dem lokalen Kommunikationsnetz im Call Center CC des Anbieters und dem öffentlichen Telefonnetz PSTN dient.

## Patentansprüche

1. Verfahren zum Einleiten sowohl einer Datennetz-Konferenzverbindung (SySS) als auch einer Sprachverbindung (SV) zwischen wenigstens einem Datennetz-Endgerät (D_{A}) eines Nutzers und einem Call Center (CC) eines Anbieters, ausgehend von einer Datennetz-Verbindung zwischen dem Datennetz-Endgerät (D_{A})und einem Datennetz-Server (D), welcher Inhalte des Anbieters zum Abruf bereithält, mit folgenden Schritten:
- Einleiten einer Datennetz-Konferenzverbindung (SySS) unter Einbeziehung eines Konferenzservers (S), der Schritt des Einleitens der Datennetz-Konferenzverbindung gesteuert durch den Datennetz-Server (D);
- Verbinden des Datennetz-Endgerätes (D_{A}) des Nutzers mit dem Konferenzserver (S);
- Einleiten einer Sprachverbindung (SV) zwischen einem Sprachendgerät (T_{A}) des Nutzers und dem Call Center (CC) durch einen Call Server (C);
- Übermitteln eines die Datennetz-Konferenzverbindung (SySS) markierenden Konferenzidentifikators an das Call Center (CC) in Form einer Nachwahlrufnummer zu einer Rufnummer des Call Centers;
- Weiterleiten der Sprachverbindung (SV) an ein Sprachendgerät (T_{B}) eines freien Arbeitsplatzes im Call Center (CC) durch eine Nebenstellenanlage (N) des Call Centers (CC);
- Weiterleiten des Konferenzidentifikators an ein dem freien Arbeitsplatz im Call Center (CC) zugeordnetes Datennetz-Endgerät (D_{B}) durch die Nebenstellenanlage (N) des Call Centers (CC); und
- Verbinden des dem freien Arbeitsplatz im Call Center (CC) zugeordneten Datennetz-Endgerätes (D_{B}) mit dem Konferenzserver (S).

2. Verfahren nach Anspruch 1,
**dadurch gekennzeichnet,**
**daß** der Schritt des Weiterleitens des Konferenzidentifikators an das dem Arbeitsplatz im Call Center (CC) zugeordnete Datennetz-Endgerät (DB) die Extraktion des Konferenzidentifikators aus der Nachwahlrufnummer umfaßt.

3. Verfahren nach Anspruch 1 oder 2,
**dadurch gekennzeichnet,**
**daß** die Datennetz-Konferenzverbindung (SySS) als Synchronized Surfing Session aufgebaut wird und der Konferenzidentifikator aus einer Server ID des Konferenzservers (S) und einer Session ID der Synchronized Surfing Session gebildet wird.

4. Verfahren nach einem der Ansprüche 1 bis 3,
**dadurch gekennzeichnet,**
**daß** die Datennetz-Konferenzverbindung (SySS) durch das Datennetz-Endgerät (D_{A}) und/oder durch das dem Arbeitsplatz im Call Center zugeordnete Datennetz-Endgerät (D_{B}) gesteuert wird.

5. Verfahren nach einem der Ansprüche 1 bis 4,
**dadurch gekennzeichnet,**
**daß** die Datennetz-Konferenzverbindung (SySS) mittels eines Netzelements, das gleichzeitig Teil eines Datennetzes (INT) und eines Sprachnetzes (PSTN) ist, oder mittels einer Gruppe von Netzelementen, wobei wenigstens ein Netzelement dieser Gruppe Teil des Datennetzes (INT) und wenigstens ein Netzelement dieser Gruppe Teil eines Sprachnetzes (PSTN) ist, aufgebaut wird.

6. Verfahren nach einem der Ansprüche 1 bis 5,
**dadurch gekennzeichnet,**
**daß** zum Einleiten und Koordinieren der Datennetz-Konferenzverbindung (SySS) und der Sprachverbindung (SV) Signalisierungsnachrichten des Telefonnetzes (PSTN) verwendet werden.

7. Verfahren nach einem der Ansprüche 1 bis 6,
**dadurch gekennzeichnet,**
**daß** als Datennetz (INT) das Internet vorgesehen ist.

8. Kommunikationsanordnung zum Einleiten sowohl einer Datennetz-Konferenzverbindung (SySS) als auch einer Sprachverbindung (SV) zwischen wenigstens einem Datennetz-Endgerät (D_{A}) eines Nutzers und einem Call Center (CC),
- mit einem zum Bereitstellen von Datennetz-Inhalten zur Wiedergabe am Datennetz-Endgerät (D_{A}) des Nutzers vorgesehenen Datennetz-Server (D), der Mittel zur Steuerung des Aufbaus der Sprachverbindung (SV) und Mittel zur Steuerung des Aufbaus der Datennetz-Konferenzverbindung (SySS) aufweist,
- mit einem Konferenzserver (S) zum Einleiten und Steuern der Datennetz-Konferenzverbindung (SySS),
- mit einem Call Server (C) zum Aufbau der Sprachverbindung (SV) in einem Sprachnetz (PSTN) mit Mitteln zum Empfang von Steuersignalen über ein Datennetz (INT),
- mit einer Nebenstellenanlage (N) des Call Centers mit Mitteln zur Auswertung einer Nachwahlrufnummer eingehender Anrufe und Mitteln zur Bestimmung einer Server ID eines Konferenzservers (S) und einer Session ID der Datennetz-Konferenzverbindung (SySS) aus der Nachwahlrufnummer sowie Mitteln zur Beeinflussung eines Datennetzendgerätes (D_{B}) in der Weise, daß wie Nebenstellenanlage (N) das Datennetzendgerät (D_{B}) veranlaßt, eine Verbindung mit der durch Server ID und Session ID markierten Datennetz-Konferenzverbindung (SySS) herzustellen.

9. Kommunikationsanordnung nach Anspruch 8,
**dadurch gekennzeichnet,**
- **daß** die Sprachendgeräte (T_{A}, T_{B}) analoge oder digitale Telefone sind und
- **daß** die Verbindung zwischen den Sprachendgeräten (T_{A}, T_{B}) eine Verbindung im leitungsvermittelnden Telefonnetz (PSTN) ist.

10. Kommunikationsanordnung nach Anspruch 8,
**dadurch gekennzeichnet,**
- **daß** ein Sprachendgerät (T_{A}, T_{B}) ein analoges oder digitales Telefon ist,
- **daß** ein weiteres Sprachendgerät (T_{A}, T_{B}) ein Datennetz-Endgerät mit Telefonie-Funktion ist und
- **daß** die Verbindung zwischen den Sprachendgeräten (T_{A}, T_{B}) zu einem Teil eine Verbindung im leitungsvermittelnden Telefonnetz (PSTN) ist und zu einem anderen Teil eine Datennetz-Verbindung ist, wobei das Datennetz (INT) und das Telefonnetz (PSTN) über eine Gateway-Einrichtung verbunden sind.

11. Kommunikationsanordnung nach Anspruch 8,
**dadurch gekennzeichnet,**
- **daß** die Sprachendgeräte (T_{A}, T_{B}) Datennetz-Endgeräte mit Telefonie-Funktion sind und
- **daß** die Verbindung zwischen den Sprachendgeräten (T_{A}, T_{B}) eine Datennetz-Verbindung ist.

12. Nebenstellenanlage (N) zum Anschluß an ein öffentliches Kommunikationsnetz (PSTN),
**dadurch gekennzeichnet,**
**daß** die Nebenstellenanlage (N) Mittel zur Auswertung einer Nachwahlrufnummer eingehender Anrufe und Mittel zur Bestimmung einer Server ID eines Konferenzservers (S) und einer Session ID einer Synchronized Surfing Session aus der Nachwahlrufnummer aufweist.

13. Nebenstellenanlage (N) nach Anspruch 12,
**dadurch gekennzeichnet,**
**daß** die Nebenstellenanlage (N) Mittel zur Beeinflussung eines Datennetzendgerätes (D_{B}) aufweist, wobei die Nebenstellenanlage (N) das Datennetzendgerät (D_{B}) veranlaßt, eine Verbindung zu der durch Server ID und Session ID markierten Synchronized Surfing Session herzustellen.

14. Nebenstellenanlage (N) nach einem der Ansprüche 12 oder 13,
**dadurch gekennzeichnet,**
**daß** die Nebenstellenanlage (N) Mittel zum Anschluß von als Datennetzendgeräte mit Telefonie-Funktion ausgeführten Telefonen (T_{B}) und Mittel zur Umsetzung von Datennetztelefonie auf leitungsvermittelte Telefonie aufweist.

## Claims

1. Method for initiating both a data network conference call (SySS) and a voice connection (SV) between at least one data network terminal device (D_{A}) of a user and a call centre (CC) of a provider, starting from a data network connection between the data network terminal device (D_{A}) and a data network server (D) and a data network terminal (DA) which provides contents of the provider for retrieval, comprising the following steps:
- initiation of a data network conference call (SySS) with the inclusion of a conference server (S), the step of initiation of the data network conference call controlled by the data network server (D);
- connection of the data network terminal device (D_{A}) of the user to the conference server (S);
- initiation of a voice connection (SV) between a voice terminal device (T_{A}) of the user and the call centre (CC) by a call server (C);
- transmission of a conference identifier denoting the data network conference call to the call centre (CC) in the form of a suffix call number to a call number of the call centre;
- forwarding of the voice connection (SV) to a voice terminal device (T_{B}) of a free workstation in the call centre (CC) by a private branch exchange (N) of the call centre (CC);
- forwarding of the conference identifier to a data network terminal device (D_{B}) assigned to the free workstation in the call centre (CC) by the private branch exchange (N) of the call centre (CC); and
- connection of the data network terminal device (D_{B}) assigned to the free workstation in the call centre (CC) to the conference server (S).

2. Method according to claim 1,
**characterized in that**
the step of forwarding the conference identifier to the data network terminal device (D_{B}) assigned to the workstation in the call centre (CC) comprises the extraction of the conference identifier from the suffix call number.

3. Method according to claim 1 or 2,
**characterized in that**
the data network conference call (SySS) is set up as a synchronized surfing session and the conference identifier is formed from a server ID of the conference server and a session ID of the synchronized surfing session.

4. Method according to one of the claims 1 to 3,
**characterized in that**
the data network conference call (SySS) is controlled by the data network terminal device (D_{A}) and/or by the data network terminal device (D_{B}) assigned to the workstation in the call centre.

5. Method according to one of the claims 1 to 4,
**characterized in that**
the data network conference call (SySS) is set up by means of a network element which is simultaneously part of a data network (INT) and a voice network (PSTN) or by means of a group of network elements, with at least one network element of this group being part of the data network (INT) and at least one network element of this group being part of a voice network (PSTN).

6. Method according to one of the claims 1 to 5,
**characterized in that**
signalling messages from the telephone network (PSTN) are used to initiate and coordinate the data network conference call (SySS) and the voice connection (SV).

7. Method according to one of the claims 1 to 6,
**characterized in that**
the Internet is provided as the data network (INT).

8. Communications arrangement for initiating both a data network conference call (SySS) and a voice connection (SV) between at least one data network terminal device (D_{A}) of a user and a call centre (CC),
- having a data network server (D) provided for providing data network contents for playback on the data network terminal device (D_{A}) of the user, which server has means for controlling the setup of the voice connection (SV) and means for controlling the setup of the data network conference call (SySS),
- having a conference server (S) for initiating and controlling the data network conference call (SySS),
- having a call server (C) for setting up the voice connection (SV) in a voice network (PSTN) with means for receiving control signals via a data network (INT),
- having a private branch exchange (N) of the call centre with means for evaluating a suffix call number of incoming calls and means for determining a server ID of a conference server (S) and a session ID of the data network conference call (SySS) from the suffix call number and also means for influencing a data network terminal device (D_{B}) such that the private branch exchange (N) prompts the data network terminal device (D_{B}) to set up a connection to the data network conference call (SySS) denoted by server ID and session ID.

9. Communications arrangement according to claim 8,
**characterized in that**
- the voice terminal devices (T_{A}, T_{B}) are analogue or digital telephones and
- the connection between the voice terminal devices (T_{A}, T_{B}) is a connection in the circuit-switched telephone network (PSTN).

10. Communications arrangement according to claim 8,
**characterized in that**
- a voice terminal device (T_{A}, T_{B}) is an analogue or digital telephone,
- a further voice terminal device (T_{A}, T_{B}) is a data network terminal device with telephony function and
- one part of the connection between the voice terminal devices (T_{A}, T_{B}) is a connection in the circuit-switched telephone network (PSTN) and another part is a data network connection, with the data network (INT) and the telephone network (PSTN) being connected via a gateway device.

11. Communications arrangement according to claim 9,
**characterized in that**
- the voice terminal devices (T_{A}, T_{B}) are data network terminal devices with telephony function and
- the connection between the voice terminal devices (T_{A}, T_{B}) is a data network connection.

12. Private branch exchange (N) for connection to a public communications network (PSTN),
**characterized in that**
the private branch exchange (N) has means for evaluating a suffix call number of incoming calls and means for determining a server ID of a conference server (S) and a session ID of a synchronized surfing session (SySS) from the suffix call number.

13. Private branch exchange (N) according to claim 12,
**characterized in that**
the private branch exchange (N) has means for influencing a data network terminal device (D_{B}), the private branch exchange (N) prompting the data network terminal device (D_{B}) to set up a connection to the synchronized surfing session (SySS) denoted by server ID and session ID.

14. Private branch exchange (N) according to one of the claims 12 or 13,
**characterized in that**
the private branch exchange (N) has means for connecting telephones (T_{B}) which are embodied in the form of data network terminal devices with a telephony function and means for converting data network telephony to circuit-switched telephony.

## Revendications

1. Procédé pour amorcer à la fois une connexion de conférence dans un réseau de données (SySS) et une liaison vocale (SV) entre au moins un terminal de réseau de données (D_{A}) d'un utilisateur et un centre d'appels (CC) d'un fournisseur, en partant d'une connexion dans un réseau de données entre le terminal de réseau de données (D_{A}) et un serveur de réseau de données (D), lequel tient à disposition à la demande des contenus du fournisseur, comprenant les étapes suivantes :
- amorçage d'une connexion de conférence dans un réseau de données (SySS) avec participation d'un serveur de conférence (S), l'étape d'amorçage de la connexion de conférence dans un réseau de données étant commandée par un serveur de réseaux de données (D) ;
- connexion du terminal de réseau de données (D_{A}) de l'utilisateur au serveur de conférence (S) ;
- amorçage d'une liaison vocale (SV) entre un terminal vocal (T_{A}) de l'utilisateur et le centre d'appels (CC) par un serveur d'appels (C) ;
- transmission d'un identificateur de conférence marquant la connexion de conférence dans un réseau de données (SySS) au centre d'appels (CC) sous forme d'un numéro d'appel de post-sélection vers un numéro d'appel du centre d'appels ;
- transmission de la liaison vocale (SV) à un terminal vocal (T_{B}) d'un poste de travail libre dans le centre d'appels (CC) par un autocommutateur privé (N) du centre d'appels (CC) ;
- transmission de l'identificateur de conférence à un terminal de réseau de données (D_{B}) associé au poste de travail libre dans le centre d'appels (CC) par l'autocommutateur privé (N) du centre d'appels (CC) ; et
- connexion du terminal de réseau de données (D_{B}) affecté au poste de travail libre dans le centre d'appels (CC) au serveur de conférence (S).

2. Procédé selon la revendication 1, **caractérisé en ce que** l'étape de transmission de l'identificateur de conférence au terminal de réseau de données (DB) associée au poste de travail dans le centre d'appels (CC) comprend l'extraction de l'identificateur de conférence à partir du numéro d'appel de post-sélection.

3. Procédé selon la revendication 1 ou 2, **caractérisé en ce que** la connexion de conférence dans un réseau de données (SySS) est établie comme Synchronized Surfing Session et que l'identificateur de conférence est formé à partir d'un identificateur ID de serveur du serveur de conférence (S) et d'un identificateur ID de session de la Synchronized Surfing Session.

4. Procédé selon l'une des revendications 1 à 3, **caractérisé en ce que** la connexion de conférence dans un réseau de données (SySS) est commandée par un terminal de réseau de données (D_{A}) et/ou par le terminal de réseau de données (D_{B}) associé au poste de travail dans le centre d'appels.

5. Procédé selon l'une des revendications 1 à 4, **caractérisé en ce que** la connexion de conférence dans un réseau de données (SySS) est établie au moyen d'un élément de réseau, qui fait à la fois partie d'un réseau de données (INT) et d'un réseau vocal (PSTN), ou au moyen d'un groupe d'éléments de réseau, au moins un élément de réseau de ce groupe faisant partie du réseau de données (INT) et au moins un élément de réseau de ce groupe faisant partie d'un réseau vocal (PSTN).

6. Procédé selon l'une des revendications 1 à 5, **caractérisé en ce que** des messages de signalisation du réseau téléphonique (PSTN) sont utilisés pour l'amorçage et la coordination de la connexion de conférence dans un réseau de données (SySS) et de liaison vocale (SV).

7. Procédé selon l'une des revendications 1 à 6, **caractérisé en ce que** l'Internet est prévu comme réseau de données (INT).

8. Système de communication pour l'amorçage à la fois d'une connexion de conférence dans un réseau de données (SySS) et d'une liaison vocale (SV) entre au moins un terminal de réseau de données (D_{A}) d'un utilisateur et un centre d'appels (CC),
- comportant un serveur de réseau de données (D) prévu pour la mise à disposition de contenus de réseau de données destinés à être transmis au terminal de réseau de données (D_{A}) de l'utilisateur, qui présente des moyens de commande de l'établissement de la liaison vocale (SV) et des moyens de commande de l'établissement de la connexion de conférence dans un réseau de données (SySS),
- comportant un serveur de conférence (S) pour l'amorçage et la commande de la connexion de conférence dans un réseau de données (SySS),
- comportant un serveur d'appels (C) pour l'établissement de la liaison vocale (SV) dans un réseau vocal (PSTN) avec des moyens de réception de signaux de commande via un réseau de données (INT),
- comportant un autocommutateur privé (N) du centre d'appels disposant de moyens d'évaluation d'un numéro d'appel de post-sélection d'appels reçus et des moyens de détermination d'un identificateur ID de serveur d'un serveur de conférence (S) et d'un identificateur ID de session de la connexion de conférence dans un réseau de données (SySS) à partir du numéro d'appel de post-sélection, ainsi que des moyens permettant d'influencer un terminal de réseau de données (D_{B}) de telle sorte que l'autocommutateur privé (N) fait en sorte que le terminal de réseau de données (D_{B}) établisse une liaison avec la connexion de conférence dans un réseau de données (SySS) par l'identificateur ID de serveur et l'identificateur ID de session.

9. Système de communication selon la revendication 8, **caractérisé en ce que**
- les terminaux vocaux (T_{A}, T_{B}) sont des téléphones analogiques ou numériques et
- **en ce que** la connexion entre les terminaux vocaux (T_{A}, T_{B}) a une connexion dans le réseau téléphonique à commutation de circuits (PSTN).

10. Système de communication selon la revendication 8, **caractérisé en ce que**
- un terminal vocal (T_{A}, T_{B}) est un téléphone analogique ou numérique,
- un autre terminal vocal (T_{A}, T_{B}) est un terminal de réseau de données à fonction de téléphonie et
- **en ce que** la connexion entre les terminaux vocaux (T_{A}, T_{B}) est d'une part une connexion dans le réseau téléphonique à commutation de circuits (PSTN) et d'autre part une connexion de réseau de données, le réseau de données (INT) et le réseau téléphonique (PSTN) étant connectés via un dispositif gateway.

11. Système de communication selon la revendication 8, **caractérisé en ce que**
- les terminaux vocaux (T_{A}, T_{B}) sont des terminaux de réseau de données à fonction de téléphonie,
- la liaison entre les terminaux vocaux (T_{A}, T_{B}) est une connexion de réseau de données.

12. Autocommutateur privé (N) destiné à être connecté à un réseau de communication public (PSTN), **caractérisé en ce que** l'autocommutateur privé (N) présente des moyens d'évaluation d'un numéro d'appel de post-sélection d'appels reçus et des moyens de détermination d'un identificateur ID de serveur d'un serveur de conférence (S) et d'un identificateur ID de session d'une Synchronized Surfing Session à partir du numéro d'appel de post-sélection.

13. Autocommutateur privé (N) selon la revendication 12, **caractérisé en ce que** l'autocommutateur privé (N) présente des moyens pour influencer un terminal de réseau de données (D_{B}), l'autocommutateur privé (N) faisant en sorte que le terminal de réseau de données (D_{B}) déclenche l'établissement d'une connexion à la Synchronized Surfing Session marquée par l'identificateur ID de serveur et l'identificateur ID de session.

14. Autocommutateur privé (N) selon l'une des revendications 12 ou 13, **caractérisé en ce que** l'autocommutateur privé (N) présente des moyens de connexion de téléphones (D_{B}) conçus comme terminaux de réseau de données à fonction de téléphonie et des moyens de conversion de téléphonie de réseau de données en téléphonie à commutation de circuits.
